# FASCICULE DE BREVET EUROPEEN

(11) **EP 4 378 162 B1**
(45) Date de publication et mention de la délivrance du brevet: **18.03.2026**
(21) Numéro de dépôt: 22758449.7
(22) Date de dépôt: 28.07.2022
(51) Int. Cl.: H04N 9/31, G02F 1/1333

(54) **DISPOSITIF DE GENERATION D'IMAGES ET AFFICHEUR TETE HAUTE COMPORTANT UN TEL DISPOSITIF**
BILDERZEUGUNGSVORRICHTUNG UND HEAD-UP-ANZEIGE MIT SOLCH EINER VORRICHTUNG
IMAGE GENERATING DEVICE AND HEAD-UP DISPLAY COMPRISING SUCH A DEVICE

(30) Priorité: 30.07.2021 FR 2108291
(43) Date de publication de la demande: 05.06.2024
(73) Titulaire: Valeo Comfort and Driving Assistance, 94000 Créteil (FR)
(72) Inventeur: BEN NACHOUANE, Ayoub, 94000 Créteil (FR)
(74) Mandataire: Delplanque, Arnaud
(86) Numéro de dépôt international: PCT/EP2022/071287
(87) Numéro de publication internationale: WO 2023/006927

(56) Documents cités:
- JP-A- 2013 073 186
- JP-A- H03 288 187

## Description

### Domaine technique

La présente invention concerne le domaine technique des systèmes d'affichages, notamment le domaine technique des systèmes de projection d'images.

L'invention concerne tout particulièrement un dispositif de génération d'image, notamment adapté à une utilisation dans un afficheur tête haute d'un véhicule automobile, et un afficheur tête haute comportant un tel dispositif.

### Arrière-plan technologique

Dans le domaine ci-dessus, un afficheur tête haute est un dispositif qui permet d'afficher des informations d'assistance à la conduite dans le champ de vision du conducteur.

A cette fin, les afficheurs tête haute comprennent un dispositif de génération d'image, par exemple une source lumineuse couplée à une matrice d'éléments à transmittance variable, par exemple un écran à cristaux liquide (LCD, pour « Liquid Crystal Display », en langue anglaise), et un système optique de transmission de cette image vers une lame partiellement-transparente, par exemple afin que le conducteur puisse voir les images sans détourner le regard de la route.

Il existe un besoin pour des afficheurs tête haute affichant des images en réalité augmentée. De tels afficheurs doivent être configurés pour afficher une image de plus forte luminosité, à une distance plus importante. Outre la puissance plus importante du système imageur, de tels afficheurs comportent des systèmes optiques permettant des taux d'agrandissement supérieurs à ceux des afficheurs classiques.

La forte puissance nécessaire à ces afficheurs entraîne une augmentation en température importante du dispositif de génération d'image. En outre, le système optique, qui agrandit les images projetées dans le champ de vision du conducteur peut, lorsqu'il est exposé à des rayons solaires, focaliser ces rayons sur le système de génération d'image, en particulier sur l'écran LCD, entraînant alors une augmentation importante de la température. Une trop forte augmentation de la température du dispositif de génération d'image, produite par la source lumineuse ou par les rayons solaires, peut le détériorer de façon irréversible.

JP H03 288187 A divulgue un dispositif de génération d'images comportant une source lumineuse, une matrice d'éléments à transmittance variable placée entre un premier polariseur amont formant une face amont de la matrice d'éléments à transmittance variable et un deuxième polariseur aval formant une face aval de la matrice d'élément à transmittance variable, et un module de refroidissement thermoélectrique.

### Résumé de l'invention

L'invention propose une solution aux problèmes susmentionnée en fournissant un afficheur tête haute plus robuste aux augmentations de température.

Selon un aspect de l'invention, il est proposé un dispositif de génération d'images comportant une source lumineuse configurée pour produire un faisceau lumineux amont et une matrice d'éléments à transmittance variable placée entre un premier polariseur amont formant une face amont de la matrice d'éléments à transmittance variable, et un deuxième polariseur aval formant une face aval de la matrice d'élément à transmittance variable configurée pour recevoir et transmettre sélectivement le faisceau lumineux amont de façon à former un faisceau lumineux aval formant une image, la face aval de la matrice d'élément à transmittance variable formée par le deuxième polariseur étant en contact avec une face amont d'une plaque au moins partiellement transparente (21) configurée pour limiter un échauffement de la matrice d'éléments à transmittance variable, dans lequel une face aval de la plaque partiellement transparente est en contact avec une face froide d'un module de refroidissement thermoélectrique.

Au sens de l'invention, les termes « amont » et « aval » sont relatif à des positions le long du chemin de propagation de la lumière émise par la source lumineuse. Ainsi, le terme « amont » signifie plus proche de la source lumineuse et le terme « aval » signifie plus loin de la source lumineuse, le long du chemin de propagation.

La combinaison de la plaque au moins partiellement transparente et du module de refroidissement thermoélectrique assure avantageusement une bonne évacuation de la chaleur accumulée par la matrice d'élément à transmittance variable. Ainsi, le dispositif de génération d'image résiste mieux à des températures élevées, notamment des températures résultant du passage du faisceau lumineux au travers de la matrice d'éléments à transmittance variable et/ou des rayons solaires focalisés sur la matrice d'éléments à transmittance variable.

Selon un mode de réalisation, le module de refroidissement thermoélectrique est en contact avec une zone périphérique de la face aval de la plaque au moins partiellement transparente de façon à laisser libre une zone centrale de la plaque au moins partiellement transparente permettant le passage du faisceau lumineux aval.

Selon un mode de réalisation, le module de refroidissement thermoélectrique est en contact avec une zone périphérique de la face aval de la plaque au moins partiellement transparente de façon à délimiter la zone centrale.

Par « délimiter », on entend ici que le module de refroidissement définit tout le contour de la zone centrale, et non pas seulement une partie.

Selon un mode de réalisation, le dispositif comporte plusieurs modules de refroidissement thermoélectrique dont les faces froides sont en contact avec la zone périphérique de la face aval de la plaque partiellement transparente.

Selon un mode de réalisation, les modules de refroidissement thermoélectriques sont électriquement couplés en série.

Un couplage en série des modules permet de limiter les connexions électriques et de simplifier le pilotage du refroidissement du dispositif.

Selon un mode de réalisation, le module de refroidissement thermoélectrique comporte une face chaude opposée à la face froide, la face chaude étant en contact avec un dissipateur thermique.

Selon un mode de réalisation, le dispositif comporte un diffuseur optique situé entre la source lumineuse et la matrice d'éléments à transmittance variable, le diffuseur optique et la matrice d'éléments à transmittance variable étant couplés à un dissipateur thermique faisant office de support pout pour le diffuseur optique et pour la matrice d'éléments à transmittance variable.

Selon un mode de réalisation, la plaque au moins partiellement transparente s'étend au-delà des contours de l'écran, la face amont de la plaque au moins partiellement transparente étant en contact avec le dissipateur thermique faisant office de support.

Selon un mode de réalisation, au moins un dissipateur thermique est couplé à un module de refroidissement par convection forcée.

Selon un mode de réalisation, la matrice d'éléments à transmittance variable est un écran à cristaux liquides.

Selon un mode de réalisation, la plaque au moins partiellement transparente est une plaque en céramique au moins partiellement transparente.

Selon un autre aspect de l'invention, il est proposé un afficheur tête haute, notamment pour véhicule automobile, comportant un dispositif de génération d'images selon l'invention.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Brève description des figures

De plus, diverses autres caractéristiques de l'invention ressortent de la description annexée effectuée en référence aux dessins qui illustrent des formes, non limitatives, de réalisation de l'invention et où :
[Fig. 1] illustre schématiquement un afficheur tête haute comportant un dispositif de génération d'images selon un mode de réalisation de l'invention,
[Fig. 2] illustre un dispositif de génération d'images selon un mode de réalisation de l'invention,
[Fig. 3] illustre un module thermoélectrique du dispositif de génération d'image du mode de réalisation de la figure 2,
[Fig. 4] illustre une variante de réalisation du module thermoélectrique de la figure 3,
[Fig. 5] illustre une autre variante de réalisation du module thermoélectrique de la figure 3,
[Fig. 6] illustre une variante de réalisation d'un dispositif de génération d'images selon l'invention.

Il est à noter que sur ces figures les éléments structurels et/ou fonctionnels communs aux différentes variantes peuvent présenter les mêmes références.

### Description détaillée

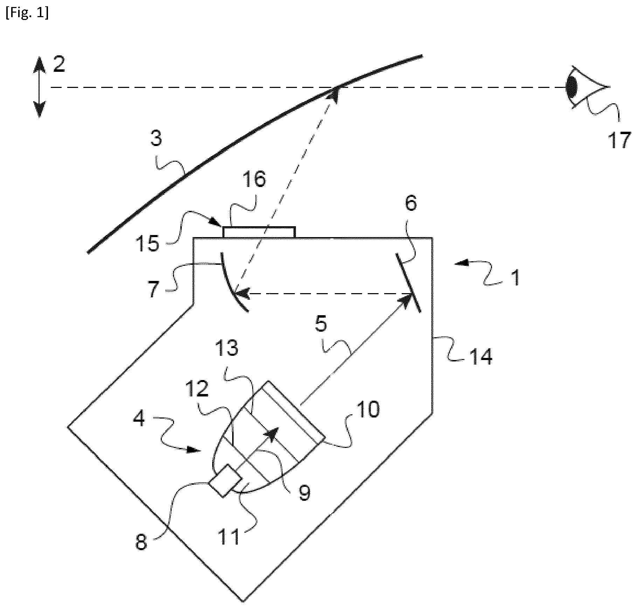

Sur la figure 1, on a représenté schématiquement les éléments principaux d'un afficheur tête haute 1, destiné par exemple à équiper un véhicule, notamment un véhicule automobile.

Un tel afficheur 1 est adapté à créer une image virtuelle 2 dans le champ de vision d'un conducteur du véhicule, de sorte que le conducteur puisse voir cette image virtuelle 2 et les informations éventuelles qu'elle contient sans avoir à détourner le regard.

A cet effet, l'afficheur 1 comprend une lame partiellement transparente 3 placée dans le champ de vision du conducteur, un dispositif de génération d'images 4 adapté à générer un faisceau lumineux aval 5 et un dispositif de projection 6, 7 adapté à renvoyer, en direction de ladite lame partiellement transparente 3, le faisceau lumineux aval 5 généré par le dispositif de génération d'images 4.

La lame partiellement transparente 3 est ici confondue avec le pare-brise du véhicule. Autrement dit, c'est le pare-brise du véhicule qui a la fonction de lame partiellement transparente pour l'afficheur tête haute 1. Cette configuration est particulièrement adaptée à la projection d'image en réalité augmentée.

En variante, la lame partiellement transparente pourrait être un combineur, c'est-à-dire une lame partiellement transparente distincte du pare-brise et dédiée à l'afficheur tête haute. Un tel combineur serait placé entre le pare-brise du véhicule et les yeux 15 du conducteur, sur le trajet du faisceau lumineux aval 5.

Le dispositif de projection comprend ici deux miroirs de repliement 6, 7 agencés de manière à réfléchir le faisceau lumineux aval 5 généré par le dispositif de génération d'images 4 en direction de la lame partiellement transparente 3. Les miroirs de repliement 6 et 7 permettent avantageusement de placer le dispositif de génération d'image 4 dans une configuration dans laquelle il ne fait pas face à la lame partiellement transparente 3 et donc de le placer dans tout endroit adapté, typiquement sous le tableau de bord du véhicule.

Par exemple ici, un premier miroir de repliement 6 est un miroir plan et un deuxième miroir de repliement 7 est un miroir incurvé qui possède une forme optimisée pour produire une image virtuelle de forme adapté à la lame partiellement transparente 3, ici une forme incurvée, de façon à afficher l'image de manière non déformée. En outre, le deuxième miroir de repliement 7 a une fonction d'agrandissement de l'image générée par la matrice d'éléments à transmittance variable.

Selon d'autres modes de réalisation, le dispositif de projection d'images 4 pourrait comprendre un nombre différent de miroirs et/ou des miroirs ayant des formes différentes, ainsi que d'autres éléments optiques, par exemple une lentille.

Le dispositif de génération d'images 4 comporte une source de lumière 8 ; ici une matrice de diodes électroluminescentes (LED, pour « Light Emitting Diode » selon l'acronyme anglo-saxon classiquement employé par l'homme du métier), configurée pour produire un faisceau lumineux amont 9, une matrice d'éléments à transmittance variable 10 configurée pour être éclairée par le faisceau lumineux amont 9 et un réflecteur 11 interposé entre la source de lumière 8 et la matrice d'éléments à transmittance variable 10. Ici, le dispositif de génération d'image 4 comporte un collimateur optique 12 et un diffuseur optique 13 au travers desquels le faisceau lumineux aval 9 passe avant d'atteindre la matrice d'éléments à transmittance variables.

La matrice d'éléments à transmittance variable 10 est configurée pour transmettre sélectivement le faisceau lumineux amont 9 de façon à former le faisceau lumineux aval 5 représentant l'image 2 à projeter dans le champ de vision du conducteur au moyen de la lame partiellement transparente 3.

Le dispositif d'affichage tête haute comprend également un boîtier 14 (généralement opaque) qui renferme le dispositif de génération d'image 4 et le système de projection 6, 7 afin notamment de protéger ces éléments contre d'éventuelles agressions extérieures (poussière, liquides, etc.).

Le boîtier 13 comporte une ouverture 15 à travers laquelle passe le faisceau lumineux aval 5, ici après réflexion sur le deuxième miroir de repliement 7.

L'ouverture 15 du boîtier 13 est fermée par une fenêtre 16 (parfois désignée sous le terme anglo-saxon « cover window ») formée par exemple d'une feuille de matière plastique de type polycarbonate d'épaisseur comprise entre 0,25 mm et 0,75mm.

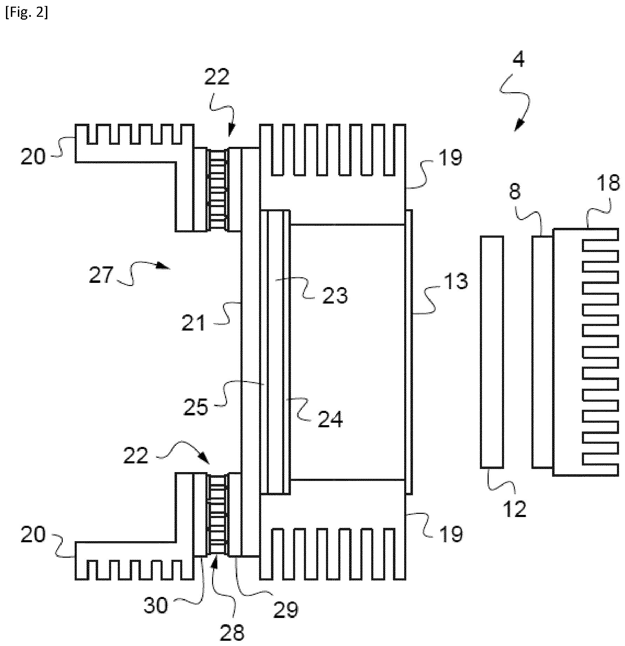

La figure 2 est une vue schématique dans laquelle le dispositif de génération d'images 4 apparaît de façon plus détaillée que sur la figure 1. En particulier, la figure 2 représente schématiquement un système de dissipation thermique du dispositif de génération d'image 4.

Dans le mode de réalisation de la figure 2, le système de dissipation thermique comporte une combinaison de dissipateurs thermiques passifs 18, 19, 20, ici de type « dissipateurs à ailettes », une plaque dissipatrice partiellement transparente 21, et un module de refroidissement thermoélectrique 22, ou module Peltier.

La matrice d'éléments à transmittance variable 10 est ici un écran à cristaux liquide (LCD, pour « Liquid Cristal Display », selon l'acronyme anglo-saxon utilisé par l'homme du métier), comportant une matrice 23 d'élément à cristaux liquides placée entre un premier polariseur 24 (polariseur amont) formant une face amont de la matrice d'éléments à transmittance variable, et un deuxième polariseur 25 (polariseur aval) formant une face aval de la matrice d'élément à transmittance variable

Un premier dissipateur thermique passif 18 est fixé sur une face arrière de la source de lumière 8 et permet d'évacuer la chaleur directement générée par la source de lumière 8. Le premier dissipateur thermique passif 18 est ici configuré pour maintenir la température de jonction de la source de lumière en dessous de ses limites thermiques fonctionnelles, ici en dessous d'une température de 110°C. Ainsi, la conductivité du matériau du premier dissipateur thermique passif 18 est supérieure à 20 W.m⁻¹.K⁻¹, et de préférence supérieure à 60 W.m⁻¹.K⁻¹.Par exemple ici, le premier dissipateur thermique est en aluminium et présente une conductivité thermique de 220 W.m⁻¹.K-¹.

La face du premier dissipateur thermique passif 18 qui est directement en contact avec la source de lumière 8 est plane ou sensiblement plane, et la face opposée est pourvue d'ailettes qui permettent d'augmenter la surface du premier dissipateur thermique passif 18 qui est en contact avec l'air et donc d'augmenter les échanges thermiques avec l'extérieur.

Afin d'améliorer le couplage thermique entre la source de lumière et le premier dissipateur thermique passif 18, en particulier si l'une ou l'autre des faces de contact entre la source de lumière 8 et le dissipateur n'est pas parfaitement plane et présente par exemple des différences de niveau supérieures à 0,1 mm, le couplage peut être réalisé par l'intermédiaire d'un matériau d'interface thermique, par exemple de la colle thermique, des tampons thermiques (« thermal pads », en langue anglaise), un matériau à changement de phase, etc..

Afin d'améliorer la dissipation thermique et d'assurer une bonne protection du premier dissipateur thermique passif contre la corrosion, le premier dissipateur 18 est ici recouvert d'une couche d'anodisation.

Un deuxième dissipateur thermique passif 19 est ici placé entre le diffuseur optique 13 et la matrice d'élément à transmittance variable 10 et permet d'évacuer la chaleur confinée entre le diffuseur optique 13 et la matrice d'éléments à transmittance variable 10. Ici, le deuxième dissipateur thermique est placé dans la continuité du réflecteur (non représenté), par exemple de façon que le diffuseur optique 13 soit maintenu par serrage entre le réflecteur et le deuxième dissipateur thermique passif 19.

La matrice d'élément à transmittance variable 10 est ici placée dans un logement du deuxième dissipateur passif 19, de façon que le deuxième dissipateur passif soit en contact avec la tranche et/ou avec une zone périphérique de la face amont de la matrice d'éléments à transmittance variable 10 (une zone périphérique du premier polariseur 24), et/ou avec une face aval du diffuseur 13. La profondeur du logement est égale ou sensiblement égal à l'épaisseur de la matrice d'éléments à transmittance variable de façon que la face aval de la matrice d'élément à transmittance variable et une face avale du deuxième dissipateur passif 19 soient sensiblement dans un même plan.

La surface externe du deuxième dissipateur thermique passif 19 est pourvue d'ailettes et sa surface interne est dépourvue d'ailette et sensiblement continue.

Ici, le matériau du deuxième dissipateur thermique passif 19 est avantageusement choisi de façon que le rapport des conductivités thermiques du premier polariseur et du matériau du deuxième dissipateur soit égal à 1 ou proche de 1. Par exemple, le deuxième dissipateur 19 est réalisé en aluminium, qui présente une conductivité thermique de 220 W.m⁻¹.K⁻¹.

Dans cet exemple, la surface intérieure du deuxième dissipateur 19 est peinte avec une couleur foncée ou mate afin de réduire les réflexions parasites.

Dans d'autres modes de réalisation, la surface intérieure du deuxième dissipateur 19 est recouverte d'un revêtement réfléchissant afin d'éviter une dégradation de l'image virtuelle 2, notamment au niveau des bords de l'image virtuelle 2.

La plaque partiellement transparente 21 est ici configurée pour drainer la chaleur depuis la matrice d'élément à transmittance variable. Ainsi, la face amont de la plaque partiellement transparente 21 est ici en contact avec la face aval de la matrice d'élément à transmittance variable 10 (en contact avec le deuxième polariseur 25) et/ou avec la face aval du deuxième dissipateur thermique passif 19. Ainsi, la plaque partiellement transparente 21 est thermiquement couplée à la matrice d'éléments à transmittance variable 10 et/ou thermiquement couplée au deuxième dissipateur thermique passif 19. La chaleur peut donc circuler depuis la matrice d'éléments à transmittance variable 10 vers l'extérieur via la plaque partiellement transparente 21 puis via le deuxième dissipateur thermique 19.

La plaque partiellement transparente 21 est ici une plaque en céramique et présente dans cet exemple une conductivité thermique supérieure à 5 W.m⁻¹.K⁻¹, et de préférence supérieure à 10 W.m⁻¹.K⁻¹.

De préférence, l'épaisseur de la plaque partiellement transparente 21 (et donc l'épaisseur du logement) est inférieure ou égale à 1,1 mm, et de façon plus préférable encore comprise entre 0,5 mm et 0,9 mm, ici 0,7 mm.

Le dépassement de la plaque partiellement transparente 21 de chaque côté de la matrice d'éléments à transmittance variable 10 est par exemple supérieur à 4 mm, de préférence supérieur à 6 mm.

Le module thermoélectrique 22 permet de drainer la chaleur depuis la plaque partiellement transparente. Il est ici placé de façon que sa face froide soit en contact thermique avec la face aval de la plaque partiellement transparente 21, et en particulier ici avec une zone périphérique de la face aval de la plaque partiellement transparente 21, en vis-à-vis d'une une zone non-exploitée (ou non optiquement utile) de la matrice d'éléments à transmittance variable 10, de façon à laisser libre une zone centrale 27 de la plaque partiellement transparente 21, en vis-à-vis d'une zone exploitée (ou optiquement utile) de la matrice d'éléments à transmittance variable 10.

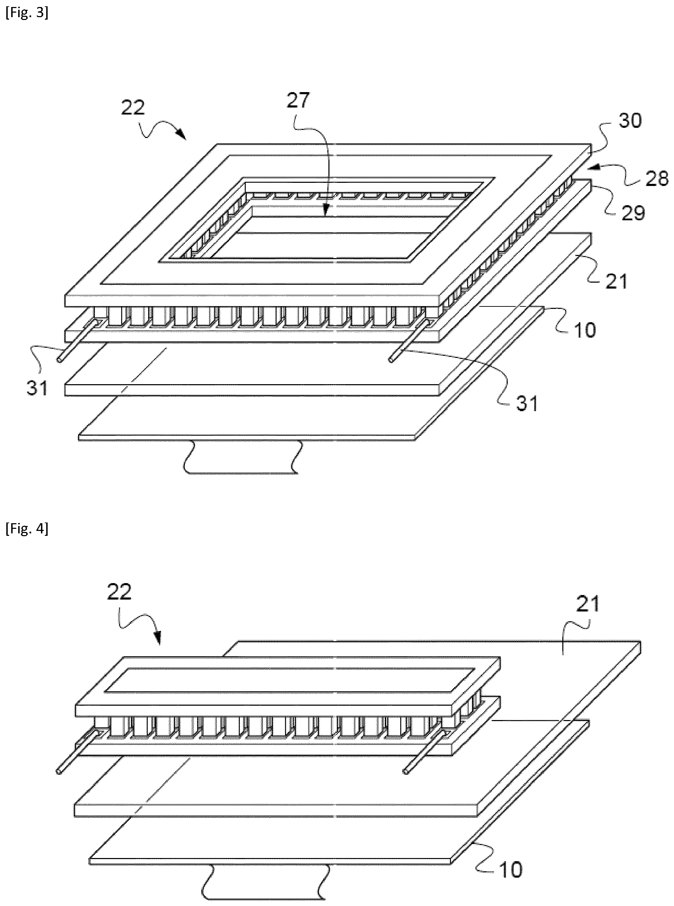

L'agencement de la matrice d'éléments à transmittance variable 10, de la plaque partiellement transparente 21 et du module thermoélectrique 22 est illustrée par la figure 3, qui est une vue éclatée de ses trois éléments.

Ici, le module thermoélectrique 22 est en forme de cadre, ou de forme rectangulaire, de façon à délimiter la zone centrale 27, c'est-à-dire de façon à en définir le contour.

Le module thermoélectrique 22 comporte ici une pluralité 28 d'éléments semi-conducteurs électriquement connectés en série par des pistes de cuivre, thermiquement connectés en parallèle, et pris en sandwich entre deux plaques de céramique métallisées 29, 30. La pluralité 28 d'éléments semi-conducteurs peut comporter sans toutefois s'y limiter du tellurure de Bismuth (Bi₂Te₃), du tellurure de plomb (PbTe), un alliage silicium-germanium (SiGe) ou encore de l'antimoniure de bismuth (BiSb). De préférence le module thermoélectrique 22 est à base de tellurure de bismuth de façon à optimiser sa capacité de refroidissement

Les dimensions du module thermoélectrique 22 dépendent de celles de la matrice d'éléments à transmittance variable 10, et en particulier des zones exploitée et non exploitée de la matrice d'éléments à transmittance variable 10. L'épaisseur du module thermoélectrique est de préférence inférieure ou égale à 5 mm, par exemple inférieure à 3 mm.

En fonctionnement, l'application d'une tension électrique entre les bornes 31 du module thermoélectrique 22 permet une circulation de chaleur entre une première plaque de céramique métallisée 29, formant une face froide du module thermoélectrique, et une deuxième plaque de céramique métallisée 30 formant une face chaude du module thermoélectrique.

La face froide d'un module thermoélectrique est la face configurée pour être en contact avec l'élément à refroidir, elle absorbe donc la chaleur. La face chaude est la face opposée, qui évacue (ou restitue) la chaleur. Ainsi, dans un module thermoélectrique, la chaleur circule de la face froide vers la face chaude.

Le module thermoélectrique 22 est ici configuré de façon que la différence de température entre sa face froide et sa face chaude soit inférieure à 10°C, et de préférence égale à 0°C. L'homme du métier saura trouver un compromis entre la différence de température et la consommation électrique du module thermoélectrique 22 selon les applications qu'il envisage.

Dans ce mode de réalisation, un troisième dissipateur thermique passif 20 est en contact avec la deuxième plaque de céramique métallisée 30, c'est-à-dire avec la face chaude du module thermoélectrique 22. Le troisième dissipateur thermique passif 20 est pourvu d'ailettes et permet d'évacuer la chaleur depuis le module thermoélectrique 22 vers l'extérieure. Le troisième dissipateur thermique passif est ici réalisé en aluminium.

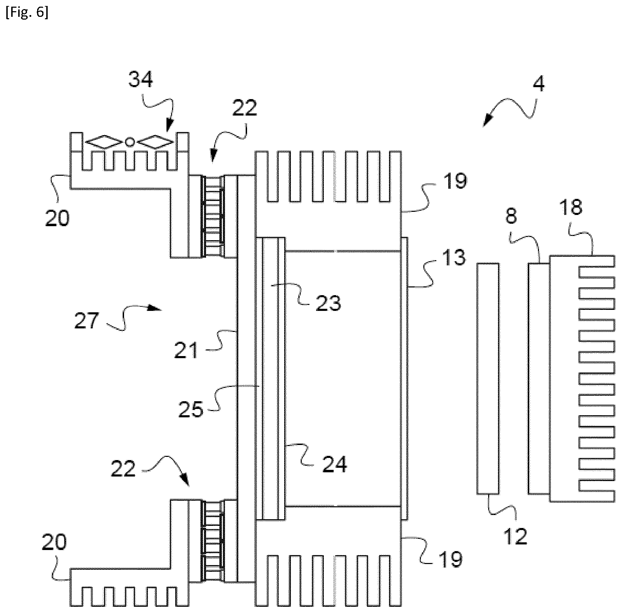

Afin d'améliorer encore davantage la dissipation thermique, certains modes de réalisations, comme celui illustré par la figure 6, comporte un ou plusieurs modules de convection forcée, par exemple ici couplé à un dissipateur thermique passif. Dans le mode de réalisation illustré, un module de convection forcée 32 est couplé au niveau des ailettes du troisième dissipateur thermique passif 20. Ici, le module de convection forcée 32 est un module de convection à air et comporte un ventilateur.

D'autres modes de réalisation couverts par l'invention comportent un nombre différent de modules à convection forcée, par exemple un ou plusieurs modules couplés à certains au moins des dissipateurs thermiques passifs, et/ou comportent des modules à convection forcée de type différent, c'est-à-dire qui mettent en œuvre un fluide autre que l'air, par exemple de l'eau ou de l'huile.

Le dispositif de génération d'images 4 selon l'invention n'est pas limité à un module thermoélectrique en forme de cadre (rectangulaire) comme celui décrit précédemment en lien avec les figures 1 à 3. En effet, le module thermoélectrique 22 peut être en contact avec une partie seulement de la zone périphérique de la face aval de la plaque partiellement transparente 21.

Ainsi, comme l'illustre la figure 4, le module thermoélectrique 22 peut ne recouvrir que partiellement la zone périphérique, par exemple ici une région de la zone périphérique ne longeant qu'un seul bord de la plaque partiellement transparente 21.

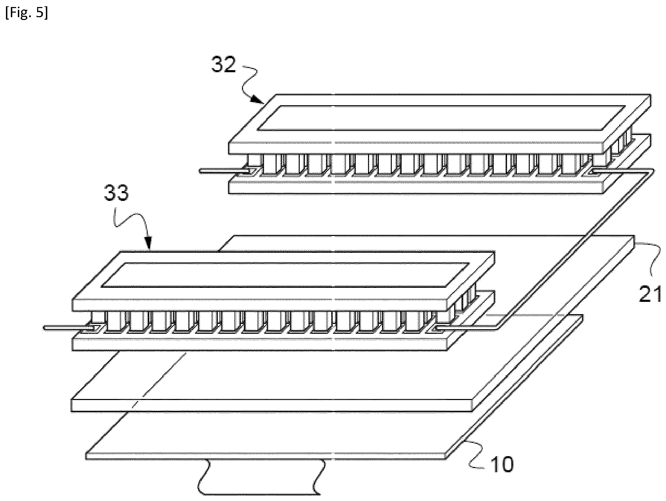

Selon une autre variante illustrée par la figure 5, le dispositif de génération d'image 4 comporte deux modules thermoélectrique 32, 33 électriquement connectés en série, chacun en contact avec une partie de la face avale de la plaque 21, en particulier avec une région déterminée de la zone périphérique, ici chacun au niveau d'un bord opposé de la plaque partiellement transparente 21.

Selon d'autres variantes, le module thermoélectrique peut comporter un nombre différent de modules thermoélectriques, par exemple trois ou quatre modules thermoélectriques, et le dissipateur thermique et/ou les modules thermoélectrique peuvent présenter toute autre forme adaptée à la zone périphérique, notamment une forme de coin ou d'angle.

Bien que la présence des premier, deuxième et troisième dissipateur thermique passif 18, 19, 20 soit particulièrement avantageuse, l'invention n'est pas limitée à leur présence et des modes de réalisation de l'invention ne comportent pas ces dissipateurs, ou comportent des dissipateurs de type différent. Par ailleurs, bien que les dissipateurs thermiques décrits précédemment sont des dissipateurs en aluminium, l'invention est compatible avec des dissipateurs qui comprennent tout autre matériau qui permet de répondre aux exigences de dissipation thermique décrites ci-avant, par exemple des alliages d'aluminium ou des alliages de magnésium.

En outre, l'invention n'est pas limitée à une matrice d'élément à transmittance variable sous la forme d'un écran LCD, mais peut prendre toute autre forme adaptée.

Diverses autres modifications peuvent être apportées à l'invention dans le cadre des revendications annexées.

## Revendications

1. Dispositif de génération d'images comportant une source lumineuse (8) configurée pour produire un faisceau lumineux (9) amont et une matrice d'éléments à transmittance variable (10, 23) placée entre un premier polariseur amont (24) formant une face amont de la matrice d'éléments à transmittance variable, et un deuxième polariseur aval (25) formant une face aval de la matrice d'élément à transmittance variable configurée pour recevoir et transmettre sélectivement le faisceau lumineux amont (9) de façon à former un faisceau lumineux aval (5) formant une image (2),
**caractérisé en ce que**
la face aval de la matrice d'élément à transmittance variable (10), formée par le deuxième polariseur (25), étant en contact avec une face amont d'une plaque au moins partiellement transparente (21) configurée pour limiter un échauffement de la matrice d'éléments à transmittance variable (10, 23), et
**en ce qu'**une face aval de la plaque partiellement transparente (21) est en contact avec une face froide d'un module de refroidissement thermoélectrique (22).

2. Dispositif de génération d'images selon la revendication 1, dans lequel le module de refroidissement thermoélectrique (22) est en contact avec une zone périphérique de la face aval de la plaque au moins partiellement transparente (21) de façon à laisser libre une zone centrale (27) de la plaque au moins partiellement transparente (21) permettant le passage du faisceau lumineux aval (5).

3. Dispositif de génération d'images selon la revendication 1 ou 2, dans lequel le module de refroidissement thermoélectrique (22) est en contact avec une zone périphérique de la face aval de la plaque au moins partiellement transparente de façon à délimiter la zone centrale (27).

4. Dispositif selon l'une des revendications 2 à 3, comportant plusieurs modules de refroidissement thermoélectrique (32, 33) dont les faces froides sont en contact avec la zone périphérique de la face aval de la plaque partiellement transparente (21).

5. Dispositif selon la revendication 4, dans lequel les modules de refroidissement thermoélectriques (32, 33) sont électriquement couplés en série.

6. Dispositif selon l'une des revendications 1 à 5, dans lequel le module de refroidissement thermoélectrique (22) comporte une face chaude opposée à la face froide, la face chaude étant en contact avec un dissipateur thermique (20).

7. Dispositif selon l'une quelconque des revendications 1 à 6, comportant un diffuseur optique (13) situé entre la source lumineuse (8) et la matrice d'éléments à transmittance variable (10), le diffuseur optique (13) et la matrice d'éléments à transmittance variable (10) étant couplés à un dissipateur thermique (19) faisant office de support pour le diffuseur optique (13) et pour la matrice d'éléments à transmittance variable (10).

8. Dispositif selon l'une quelconque des revendications 1 à 6, dans lequel la plaque au moins partiellement transparente (21) s'étend au-delà des contours de la matrice d'élément à transmittance variable (10), la face amont de la plaque au moins partiellement transparente (21) étant en contact avec le dissipateur thermique (19) faisant office de support.

9. Dispositif selon l'une quelconque des revendications 1 à 8, dans lequel au moins un dissipateur thermique (20) est couplé à un module de refroidissement par convection forcée (34).

10. Dispositif selon l'une quelconque des revendications 1 à 9, dans lequel la matrice d'éléments à transmittance variable (10) est un écran à cristaux liquides.

11. Dispositif selon l'une quelconque des revendications 1 à 10, dans lequel la plaque au moins partiellement transparente (21) est une plaque en céramique au moins partiellement transparente.

12. Afficheur tête haute comportant un dispositif de génération d'images selon l'une quelconque des revendications 1 à 11.

## Patentansprüche

1. Bilderzeugungsvorrichtung mit einer Lichtquelle (8), die so konfiguriert ist, dass sie einen stromaufwärtigen Lichtstrahl (9) erzeugt, und einer Matrix aus Elementen mit variabler Durchlässigkeit (10, 23), die zwischen einem ersten stromaufwärtigen Polarisator (24), der eine stromaufwärtige Seite der Matrix aus Elementen mit variabler Durchlässigkeit bildet, und einem zweiten nachgeschalteten Polarisator (25), der eine nachgeschaltete Seite der Matrix aus Elementen mit variabler Durchlässigkeit bildet, die so konfiguriert ist, dass sie den stromaufwärts gerichteten Lichtstrahl (9) empfängt und selektiv durchlässt, um einen stromabwärts gerichteten Lichtstrahl (5) zu bilden, der ein Bild (2) erzeugt,
**dadurch gekennzeichnet, dass** die stromabwärtige Fläche der Matrix aus Elementen mit variabler Durchlässigkeit (10), die durch den zweiten Polarisator (25) gebildet wird, mit einer stromaufwärtigen Fläche einer zumindest teilweise transparenten Platte (21) in Kontakt steht, die so konfiguriert ist, dass sie eine Erwärmung der Matrix aus Elementen mit variabler Durchlässigkeit (10, 23) begrenzt, und
dass eine stromabwärtige Seite der teilweise transparenten Platte (21) mit einer kalten Seite eines thermoelektrischen Kühlmoduls (22) in Kontakt steht.

2. Bilderzeugungsvorrichtung nach Anspruch 1, wobei das thermoelektrische Kühlmodul (22) mit einem Randbereich der stromabwärts gelegenen Seite der zumindest teilweise transparenten Platte (21) in Kontakt steht, so dass ein zentraler Bereich (27) der zumindest teilweise transparenten Platte (21) frei bleibt, der den Durchgang des stromabwärts gelegenen Lichtstrahls (5) ermöglicht.

3. Bildgebungsvorrichtung nach Anspruch 1 oder 2, wobei das thermoelektrische Kühlmodul (22) mit einem Randbereich der stromabwärtigen Seite der zumindest teilweise transparenten Platte in Kontakt steht, um den zentralen Bereich (27) abzugrenzen.

4. Vorrichtung nach einem der Ansprüche 2 bis 3, mit mehreren thermoelektrischen Kühlmodulen (32, 33), deren kalte Seiten mit dem Randbereich der stromabwärtigen Seite der teilweise transparenten Platte (21) in Kontakt stehen.

5. Vorrichtung nach Anspruch 4, bei der die thermoelektrischen Kühlmodule (32, 33) elektrisch in Reihe geschaltet sind.

6. Vorrichtung nach einem der Ansprüche 1 bis 5, wobei das thermoelektrische Kühlmodul (22) eine der kalten Seite gegenüberliegende warme Seite aufweist, wobei die warme Seite mit einem Kühlkörper (20) in Kontakt steht.

7. Vorrichtung nach einem der Ansprüche 1 bis 6, mit einem optischen Diffusor (13), der zwischen der Lichtquelle (8) und der Matrix aus Elementen mit variabler Durchlässigkeit (10) angeordnet ist, wobei der optische Diffusor (13) und die Matrix aus Elementen mit variabler Durchlässigkeit (10) mit einem Kühlkörper (19) verbunden sind, der als Träger für den optischen Diffusor (13) und für die Matrix aus Elementen mit variabler Durchlässigkeit (10) dient.

8. Vorrichtung nach einem der Ansprüche 1 bis 6, wobei sich die zumindest teilweise transparente Platte (21) über die Konturen der Matrix aus Elementen mit variabler Durchlässigkeit (10) hinaus erstreckt, wobei die stromaufwärtige Seite der zumindest teilweise transparenten Platte (21) mit dem als Träger dienenden Kühlkörper (19) in Kontakt steht.

9. Vorrichtung nach einem der Ansprüche 1 bis 8, wobei mindestens ein Kühlkörper (20) mit einem Zwangskonvektionskühlmodul (34) gekoppelt ist.

10. Vorrichtung nach einem der Ansprüche 1 bis 9, wobei die Matrix aus Elementen mit variabler Durchlässigkeit (10) ein Flüssigkristallbildschirm ist.

11. Vorrichtung nach einem der Ansprüche 1 bis 10, wobei die zumindest teilweise transparente Platte (21) eine zumindest teilweise transparente Keramikplatte ist.

12. Head-up-Display mit einer Bilderzeugungsvorrichtung gemäß einem der Ansprüche 1 bis 11.

## Claims

1. An image generating device comprising a light source (8) configured to produce an upstream light beam (9) and an array of variable transmittance elements (10, 23) positioned between a first upstream polariser (24) forming an upstream face of the array of variable transmittance elements, and a second downstream polariser (25) forming a downstream face of the variable transmittance element array configured to selectively receive and transmit the upstream light beam (9) so as to form a downstream light beam (5) forming an image (2),
**characterised in that** the downstream face of the variable transmittance element array (10), formed by the second polariser (25), is in contact with an upstream face of an at least partially transparent plate (21) configured to limit heating of the variable transmittance element array (10, 23), and
**in that** a downstream face of the partially transparent plate (21) is in contact with a cold face of a thermoelectric cooling module (22).

2. Image generation device according to claim 1, wherein the thermoelectric cooling module (22) is in contact with a peripheral area of the downstream face of the at least partially transparent plate (21) so as to leave a central area (27) of the at least partially transparent plate (21) free to allow the downstream light beam (5) to pass through.

3. Image generation device according to claim 1 or 2, wherein the thermoelectric cooling module (22) is in contact with a peripheral area of the downstream face of the at least partially transparent plate so as to delimit the central area (27).

4. Device according to one of claims 2 to 3, comprising several thermoelectric cooling modules (32, 33) whose cold faces are in contact with the peripheral area of the downstream face of the partially transparent plate (21).

5. Device according to claim 4, in which the thermoelectric cooling modules (32, 33) are electrically coupled in series.

6. Device according to one of claims 1 to 5, wherein the thermoelectric cooling module (22) has a hot face opposite the cold face, the hot face being in contact with a heat sink (20).

7. Device according to any of claims 1 to 6, comprising an optical diffuser (13) located between the light source (8) and the matrix of variable transmittance elements (10), the optical diffuser (13) and the array of variable transmittance elements (10) being coupled to a heat sink (19) acting as a support for the optical diffuser (13) and for the array of variable transmittance elements (10).

8. Device according to any of claims 1 to 6, wherein the at least partially transparent plate (21) extends beyond the contours of the variable transmittance element array (10), the upstream face of the at least partially transparent plate (21) being in contact with the heat sink (19) acting as a support.

9. Device according to any of claims 1 to 8, wherein at least one heat sink (20) is coupled to a forced convection cooling module (34).

10. Device according to any of claims 1 to 9, wherein the array of variable transmittance elements (10) is a liquid crystal display.

11. Device according to any of claims 1 to 10, wherein the at least partially transparent plate (21) is an at least partially transparent ceramic plate.

12. Head-up display comprising an image generating device according to any one of claims 1 to 11.
